# FASCICULE DE BREVET EUROPEEN

(11) **EP 4 025 502 B1**
(45) Date de publication et mention de la délivrance du brevet: **07.06.2023**
(21) Numéro de dépôt: 21708040.7
(22) Date de dépôt: 03.03.2021
(51) Int. Cl.: B64G 1/22, B64G 1/66, B64G 1/10, H01Q 1/28, H01Q 15/16

(54) **PROCÉDÉ DE FABRICATION D'UN SATELLITE À PARTIR D'UNE CONFIGURATION GÉNÉRIQUE D'ÉLÉMENTS ANTENNAIRES**
VERFAHREN ZUR HERSTELLUNG EINES SATELLITEN AUS EINER GENERISCHEN KONFIGURATION VON ANTENNENELEMENTEN
METHOD FOR PRODUCING A SATELLITE FROM A GENERIC CONFIGURATION OF ANTENNA ELEMENTS

(30) Priorité: 04.03.2020 FR 2002186
(43) Date de publication de la demande: 13.07.2022
(73) Titulaire: Airbus Defence and Space SAS, 31402 Toulouse Cedex 4 (FR)
(72) Inventeur: STRZELECKI, Jérôme, 31402 Toulouse cedex 4 (FR); BAPPEL, Yann, 31402 Toulouse cedex 4 (FR)
(74) Mandataire: Ipside
(86) Numéro de dépôt international: PCT/EP2021/055290
(87) Numéro de publication internationale: WO 2021/175903

(56) Documents cités:
- FR-A1- 2 780 819
- US-A1- 2002 135 532
- US-A1- 2017 158 357
- Ahmad Ghulam: "Modern Communication Satellite Antenna Technology" In: "Recent Advances in Technologies", 1 novembre 2009 (2009-11-01), INTECH, China, XP055290259, ISBN: 978-953-307-017-9 DOI: 10.5772/7412, page 1 - page 18; figures 4-5
- HAN C C ET AL: "CHAPTER 21: Satellite Antennas", 1 janvier 1993 (1993-01-01), ANTENNA HANDBOOK. VOLUME 3: APPLICATIONS, CHAPMAN & HALL, PAGE(S) 21/1 - 21/113, XP009172704, ISBN: 978-0-442-01594-7 figure 45

## Description

### Domaine de l'invention

La présente invention appartient au domaine des satellites de communication ou d'observation embarquant des antennes à réflecteur parabolique sur une face du satellite. L'invention concerne notamment un procédé de fabrication permettant de faciliter l'intégration des antennes sur le satellite lors de la conception du satellite.

### Etat de la technique

Un satellite de communication ou d'observation est généralement placé en orbite autour de la Terre pour accomplir une mission particulière associée à une ou plusieurs zones géographiques à la surface de la Terre. Pour remplir sa mission, le satellite comporte une ou plusieurs antennes qui comportent généralement chacune une source d'émission ou de réception radiofréquences, un réflecteur avec des paramètres géométriques particuliers (diamètre, distance focale, profil, etc.), une structure de support pour le réflecteur, des dispositifs de maintien et de libération du réflecteur et un dispositif de déploiement du réflecteur.

Les procédés conventionnels de fabrication d'un satellite pour accomplir une mission particulière comportent généralement une étape relativement fastidieuse de détermination des paramètres des différentes antennes du satellite pour couvrir les différentes zones géographiques de la mission du satellite. Cette étape consiste par exemple à déterminer pour chaque antenne, en fonction de la zone géographique qui doit être couverte par l'antenne, le diamètre du réflecteur de l'antenne, sa distance focale, la position de la ou des sources radiofréquences de l'antenne, les dimensions de la structure de support du réflecteur, la position des dispositifs de maintien et de libération du réflecteur, la position du dispositif de déploiement, la forme du profil du réflecteur, etc.

Des contraintes techniques relatives à la structure du satellite peuvent impacter la détermination de ces paramètres. En outre, des modifications apportées à un paramètre particulier impactent les autres paramètres, et il est généralement nécessaire de procéder par tâtonnement avec un grand nombre d'itérations pour obtenir un ensemble de paramètres convenables et compatibles les uns avec les autres pour satisfaire les besoins de la mission.

Le nombre d'antennes embarquées sur un satellite a tendance à augmenter. Aussi, la phase d'intégration des antennes sur le satellite est particulièrement longue et coûteuse. Cette phase d'intégration fait souvent partie du chemin critique de la fabrication du satellite. En effet, pour chaque nouveau satellite à fabriquer, il est nécessaire de redéfinir l'ensemble de tous les paramètres de chaque antenne en fonction de la mission du satellite.

Le document « Modern Communication Satellite Antenna Technology » (A. Ghulam) détaille les différents paramètres du système antennaire d'un satellite qu'il convient de définir lors de la fabrication du satellite pour que ce dernier puisse remplir une mission particulière. Ce document décrit également différents outils logiciels d'aide à la détermination de ces paramètres.

Lorsque la mission d'un satellite est associée à plusieurs zones géographiques différentes à la surface de la Terre, le dispositif de déploiement peut être piloté (on parle alors de « steering » dans la littérature anglo-saxonne) pour déplacer le réflecteur afin de le faire pointer vers différentes zones géographiques d'intérêt. La demande de brevet US 2002/135532 A1 divulgue un tel dispositif de déploiement permettant d'ajuster la position d'un réflecteur. Dans un tel cas, les paramètres de l'antenne doivent être définis de telle sorte que l'antenne permette de satisfaire la mission pour chaque zone géographique d'intérêt. Un compromis doit donc être trouvé car l'antenne n'est alors pas optimisée pour une seule position particulière du réflecteur mais pour plusieurs positions correspondant aux différentes zones géographiques d'intérêt.

### Exposé de l'invention

La présente invention a pour objectif de remédier à tout ou partie des inconvénients de l'art antérieur, notamment ceux exposés ci-avant, en proposant une solution qui facilite la phase d'intégration des antennes lors de la fabrication d'un satellite.

A cet effet, et selon un premier aspect, il est proposé par la présente invention, un procédé de fabrication d'un satellite artificiel destiné à être placé en orbite autour de la Terre pour accomplir une mission associée à une ou plusieurs zones géographiques à la surface de la Terre. Le satellite comprend un ou plusieurs réflecteurs sur une face du satellite. Chaque réflecteur est relié à ladite face du satellite via un dispositif de déploiement permettant de faire passer le réflecteur d'une position repliée à une position déployée. Lorsqu'il y a plusieurs réflecteurs, les réflecteurs sont empilés l'un au-dessus de l'autre en regard de la face du satellite quand les réflecteurs sont en position repliée. Chaque réflecteur est associé à une source d'émission ou de réception radiofréquences pour former un faisceau radio transportant un signal radio vers ou en provenance d'une zone géographique à la surface de la Terre.

Le procédé de fabrication comprend tout d'abord une étape préalable de détermination d'une configuration générique, indépendamment de la mission du satellite (c'est-à-dire indépendamment de la ou des zones géographiques associées à la mission du satellite), en fixant au moins les paramètres suivants pour chaque réflecteur :
- diamètre du réflecteur,
- distance focale du réflecteur,
- distance de décalage du réflecteur lorsque le réflecteur est en position déployée,
- position du dispositif de déploiement sur la face du satellite,
- position de la source associée audit réflecteur sur la face du satellite,
de telle sorte qu'un faisceau issu de la source pointe vers le centre de la Terre lorsque le satellite est en orbite et le réflecteur est en position déployée.

Le procédé de fabrication comprend ensuite une étape de configuration spécifique, en fonction de la mission du satellite (c'est-à-dire en fonction de la ou des zones géographiques associées à la mission du satellite). L'étape de configuration spécifique comprend les sous-étapes suivantes pour chaque réflecteur :
- une détermination d'une position déployée ajustée du réflecteur obtenue par pilotage du dispositif de déploiement, de sorte qu'un faisceau issu de la source pointe vers une zone géographique de la mission du satellite lorsque le satellite est en orbite et le réflecteur est en position déployée ajustée,
- une conformation de la surface du réflecteur en fonction de ladite zone géographique et en fonction de la position déployée ajustée ainsi déterminée.

L'étape de configuration spécifique est mise en oeuvre sans modifier les paramètres fixés pendant l'étape préalable de détermination de la configuration générique.

En d'autres termes, le procédé de fabrication d'un satellite selon l'invention consiste à réutiliser une configuration générique qui a été définie indépendamment d'une mission particulière, et à définir un nombre limité de paramètres particuliers en fonction de la mission spécifique du satellite. La configuration générique est déterminée de telle sorte que chaque antenne pointe par défaut vers le centre de la Terre. La configuration spécifique est ensuite rendue possible par un pilotage (« steering » dans la littérature anglo-saxonne) du dispositif de déploiement, c'est-à-dire par une modification du pointage de l'antenne une fois que le réflecteur est déployé. La configuration générique peut être réutilisée pour chaque nouveau satellite à fabriquer. Seule la configuration spécifique doit être redéfinie pour un nouveau satellite à fabriquer.

Pour la configuration générique, la « position déployée » d'un réflecteur correspond à une « position déployée par défaut » définie de telle sorte que le réflecteur pointe vers le centre de la Terre. Pour la configuration spécifique, la « position déployée ajustée » correspond à une position déployée différente de la position déployée par défaut. Lorsque le réflecteur est à la position déployée ajustée, le réflecteur pointe vers une zone géographique particulière à la surface de la Terre pour remplir une mission spécifique.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, chaque réflecteur est associé à des dispositifs de maintien et de libération comprenant une portion détachable sur commande et permettant de maintenir le réflecteur en position repliée pendant une phase de lancement du satellite et de libérer le réflecteur en position déployée une fois que le satellite est en orbite. L'étape préalable de détermination d'une configuration générique comprend également de fixer, pour chaque réflecteur, la position des dispositifs de maintien et de libération sur la face du satellite.

Dans des modes particuliers de mise en oeuvre, la face comporte au moins deux réflecteurs.

Dans des modes particuliers de mise en oeuvre, les réflecteurs partagent les mêmes dispositifs de maintien et de libération. Le procédé selon l'invention est en effet particulièrement bien adapté dans un tel cas.

Dans des modes particuliers de mise en oeuvre, les réflecteurs ont tous un diamètre compris entre 220 et 270 centimètres.

Dans des modes particuliers de mise en oeuvre, la configuration spécifique est optimisée en itérant plusieurs fois les sous-étapes de détermination d'une position déployée ajustée et de conformation de la surface du réflecteur.

Selon un deuxième aspect, il est proposé par la présente invention, une face pour fabriquer un satellite selon un procédé de fabrication selon l'un quelconque des modes de mise en oeuvre précédent. La face comporte un ou plusieurs réflecteurs, chaque réflecteur étant relié à ladite face du satellite par l'intermédiaire d'un dispositif de déploiement permettant de faire passer le réflecteur d'une position repliée à une position déployée. Les réflecteurs sont empilés l'un au-dessus de l'autre en regard de la face du satellite quand les réflecteurs sont en position repliée. Pour chaque réflecteur, la face comporte également une source d'émission ou de réception radiofréquences pour former un faisceau transportant un signal radio vers ou en provenance de la Terre. Chaque réflecteur, chaque source et chaque dispositif de déploiement sont agencés pour qu'un faisceau issu d'une source pointe vers le centre de la Terre lorsque le satellite est en orbite et le réflecteur est dans une position déployée par défaut. Le dispositif de déploiement est en outre configuré pour déplacer chaque réflecteur dans une position déployée ajustée à laquelle le réflecteur pointe vers une zone géographique spécifique correspondant à une mission du satellite.

Une telle face répond aux exigences d'une configuration générique du procédé de fabrication selon l'invention. Pour finaliser la phase d'intégration des antennes lors de la fabrication d'un satellite destiné à remplir une mission spécifique associée à une ou plusieurs zones géographiques à la surface de la Terre, il ne reste alors plus qu'à déterminer pour chaque réflecteur une position déployée ajustée, et à conformer la surface du réflecteur, de telle sorte qu'un faisceau issu de la source associée audit réflecteur couvre une zone géographique particulière de la mission du satellite.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la face comporte entre un et trois réflecteurs, chaque réflecteur satisfaisant à l'un des ensembles de paramètres suivants (chaque ensemble de paramètres comporte un diamètre du réflecteur, une distance focale du réflecteur, et une distance de décalage mesurée entre le sommet d'un paraboloïde dans lequel s'inscrit le réflecteur et l'extrémité du réflecteur la plus proche dudit sommet) :
- diamètre compris entre 220 et 270 centimètres, distance focale comprise entre 380 et 420 centimètres, distance de décalage comprise entre 65 et 105 centimètres,
- diamètre compris entre 220 et 270 centimètres, distance focale comprise entre 358 et 398 centimètres, distance de décalage comprise entre 90 et 130 centimètres,
- diamètre compris entre 220 et 270 centimètres, distance focale comprise entre 375 et 415 centimètres, distance de décalage comprise entre 90 et 130 centimètres.

Dans des modes particuliers de réalisation, la face comporte au moins deux réflecteurs.

Dans des modes particuliers de réalisation, la face comporte plusieurs réflecteurs. La face comporte en outre des dispositifs de maintien et de libération comprenant une portion détachable sur commande et permettant de maintenir les réflecteurs en position repliée pendant une phase de lancement du satellite, et de libérer les réflecteurs en position déployée une fois que le satellite est en orbite. Avantageusement, les différents réflecteurs partagent les mêmes dispositifs de maintien et de libération.

Dans des modes particuliers de réalisation, les réflecteurs sont concentriques lorsque les réflecteurs sont en position repliée. On entend par là que les réflecteurs sont « sensiblement » concentriques, c'est-à-dire par exemple que la distance projetée sur la face du satellite entre les centres de deux réflecteurs est inférieure à 10% du plus petit des diamètres des réflecteurs, voire inférieure à 5% cm du plus petit des diamètres des réflecteurs.

Dans des modes particuliers de réalisation, les sources et/ou les dispositifs de déploiement sont alignés selon un axe transversal de la face. On entend par là que ces éléments sont « sensiblement » alignés, c'est-à-dire par exemple que la distance projetée entre deux éléments selon un axe orthogonal audit axe transversal est inférieure à 20 cm, voire inférieure à 10 cm.

Selon un troisième aspect, la présente invention concerne un satellite comportant une face selon l'un quelconque des modes de réalisation précédents.

### Présentation des figures

L'invention sera mieux comprise à la lecture de la description suivante, donnée à titre d'exemple nullement limitatif, et faite en se référant aux figures 1 à 10 qui représentent :
[Fig. 1] une représentation d'une face d'un satellite présentant plusieurs réflecteurs empilés en position repliée,
[Fig. 2] une représentation schématique d'un satellite avec un réflecteur en position repliée sur une face du satellite,
[Fig. 3] une représentation schématique d'une vue de profil du satellite illustré à la figure 2 lorsque le réflecteur est en position repliée,
[Fig. 4] une représentation schématique du satellite illustré à la figure 3 lorsque le réflecteur est en position déployée,
[Fig. 5] une représentation schématique des principaux paramètres géométriques pour un réflecteur,
[Fig. 6] une représentation schématique d'un satellite avec deux réflecteurs empilés en position repliée sur une face du satellite,
[Fig. 7] une représentation schématique des principales étapes d'un procédé de fabrication d'un satellite selon l'invention,
[Fig. 8] une représentation schématique d'un satellite en orbite autour de la Terre avec un réflecteur en position déployée selon une configuration générique,
[Fig. 9] une représentation schématique d'un satellite en orbite autour de la Terre avec un réflecteur en position déployée selon une configuration spécifique,
[Fig. 10] une représentation schématique illustrant comment les dispositifs de maintien et de libération des réflecteurs d'un satellite peuvent interférer avec un faisceau issue d'une source radiofréquences du satellite,
[Fig. 11] une représentation schématique d'une face d'un satellite avec trois réflecteurs en position déployée lorsque des dispositifs de maintien et de libération différents sont utilisés pour les différents réflecteurs,
[Fig. 12] une représentation schématique de trois réflecteurs empilés en position repliée partageant les mêmes dispositifs de maintien et de libération,
[Fig. 13] une représentation d'un dispositif de maintien et de libération destiné à être associé à trois réflecteurs différents,
[Fig. 14] une représentation schématique d'une face d'un satellite avec trois réflecteurs en position déployée lorsque les mêmes dispositifs de maintien et de libération sont utilisés pour les différents réflecteurs.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée d'un mode de réalisation de l'invention

Dans la suite de la description, on se place à titre d'exemple dans le cas de la fabrication d'un satellite de télécommunications destiné à être placé en orbite géostationnaire autour de la Terre. On entend par une orbite géostationnaire une orbite circulaire autour de la Terre caractérisée par une inclinaison orbitale nulle (l'orbite est donc située dans le plan équatorial) et une période orbitale égale à la période de rotation de la Terre.

Le satellite est placé en orbite pour accomplir une mission particulière associée à une ou plusieurs zones géographiques à la surface de la Terre. Le satellite comporte dans ce but une ou plusieurs antennes à réflecteur parabolique. Chaque réflecteur est destiné à couvrir une zone géographique de la mission du satellite pour assurer des échanges de messages par communication radio entre une station située dans ladite zone géographique sur la surface de la Terre et le satellite.

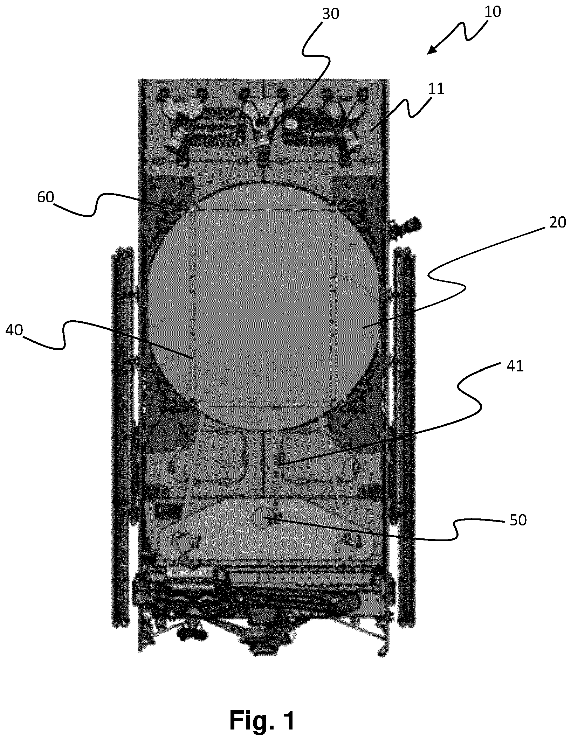

La figure 1 représente un exemple d'une face 11 d'un tel satellite 10 comportant trois réflecteurs 20. Chaque réflecteur est fixé à une structure 40 de support reliée à la face 11 du satellite via un dispositif 50 de déploiement. Dans l'exemple considéré et illustré sur la figure 1, la structure 40 de support comporte plusieurs éléments métalliques rectilignes assemblés ensemble et agencés en forme de rectangle, ainsi qu'un élément métallique rectiligne supplémentaire servant de bras 41 de liaison avec le dispositif 50 de déploiement. Rien n'empêche cependant, dans des variantes, que les éléments formant la structure 40 de support soient courbés, qu'ils soient assemblés sous une autre forme qu'un rectangle, et/ou qu'ils soient fabriqués à partir d'un matériau non métallique (par exemple en fibres de carbone).

Le dispositif 50 de déploiement (ADTM pour « Antenna Deployment and Trimming Mechanism » en anglais) permet de faire passer le réflecteur 20 d'une position repliée vers une position déployée. La position repliée est la position prise par un réflecteur 20 pendant la phase de lancement du satellite (c'est-à-dire pendant le décollage et le vol du lanceur du satellite, et pendant le largage du satellite). Dans la position repliée, chaque réflecteur 20 est positionné en regard de la face 11 du satellite. Lorsqu'il y a plusieurs réflecteurs sur la même face 11 du satellite, comme c'est le cas dans l'exemple illustré à la figure 1, les réflecteurs sont empilés les uns au-dessus des autres en regard de la face 11 du satellite quand ils sont en position repliée. Lorsque les réflecteurs 20 sont en position repliée, l'encombrement du satellite 10 est réduit, ce qui est avantageux pour placer le satellite dans une coiffe d'un lanceur. D'autre part, lorsque les réflecteurs 20 sont en position repliée, ils résistent mieux aux contraintes mécaniques dues aux vibrations pendant la phase de lancement.

Des dispositifs 60 de maintien et de libération (HRM pour « Hold and Release Mechanism » en anglais) permettent de maintenir les réflecteurs 20 en position repliée pendant la phase de lancement du satellite puis de libérer les réflecteurs 20 pour qu'ils puissent être déployés une fois que le satellite 10 est en orbite.

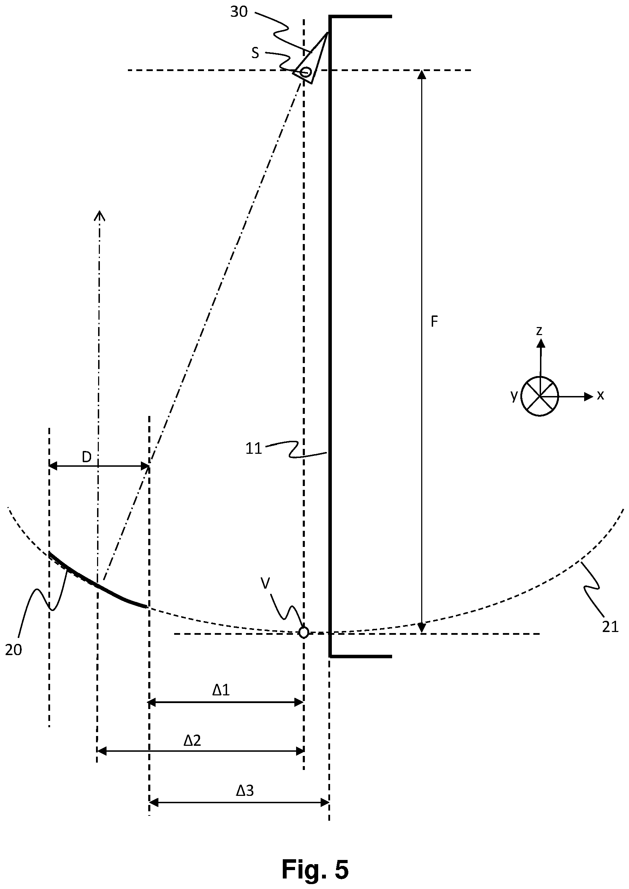

En position déployée, un réflecteur est écarté de la face 11 du satellite par l'intermédiaire du dispositif 50 de déploiement et du bras 41 de liaison de telle sorte que le réflecteur est positionné en regard de la Terre. L'écartement du réflecteur par rapport à la face 11 du satellite peut être défini par une distance de décalage du réflecteur lorsque le réflecteur est en position déployée. Cette distance de décalage sera définie ultérieurement de façon plus précise en référence à la figure 5.

Chaque réflecteur 20 est associé à au moins une source 30 d'émission ou de réception radiofréquences. Une source radiofréquences permet de former un faisceau transportant un signal radio vers ou en provenance de la zone géographique à la surface de la Terre couverte par le réflecteur 20. On entend par signal radio une onde électromagnétique dont la fréquence est inférieure à 300 GHz. Une source 30 radiofréquences du satellite 10 est par exemple adaptée pour émettre un signal radio sur une liaison descendante de la couche Ku (gamme de fréquences micro-ondes allant de 10,70 à 12,75 GHz) et/ou pour recevoir un signal radio sur une liaison montante de la couche Ku (gamme de fréquences micro-ondes allant de 12,75 à 18 GHz). Selon d'autres exemples, une source 30 radiofréquences peut également être adaptée pour émettre sur une autre bande de fréquences comme par exemple l'une des bandes L, S, C, X, Ka, Q ou V.

Dans l'exemple considéré, chaque réflecteur 20 est associé à une seule source 30 radiofréquences prenant par exemple la forme d'un cornet corrugué (l'intérieur du cornet présente des usinages annulaires pour améliorer le diagramme de rayonnement de l'antenne). Chaque source forme un faisceau radio. Il convient cependant de noter que l'invention pourrait également s'appliquer à une antenne de type SFPB (acronyme anglais de « Single Feed Per Beam ») pour laquelle le réflecteur est associé à plusieurs sources, chaque source étant associée à un faisceau radio, ou à une antenne de type MFPB (acronyme anglais de « Multiple Feeds Per Beam ») pour laquelle le réflecteur est associé à un réseau de plusieurs sources permettant de former des faisceaux différents, chaque faisceau étant formé par plusieurs sources du réseau. Dans le cas d'une antenne SFPB ou MFPB, l'unique source 30 radiofréquences représentée sur la figure 1 serait remplacée par un ensemble de plusieurs sources radiofréquences.

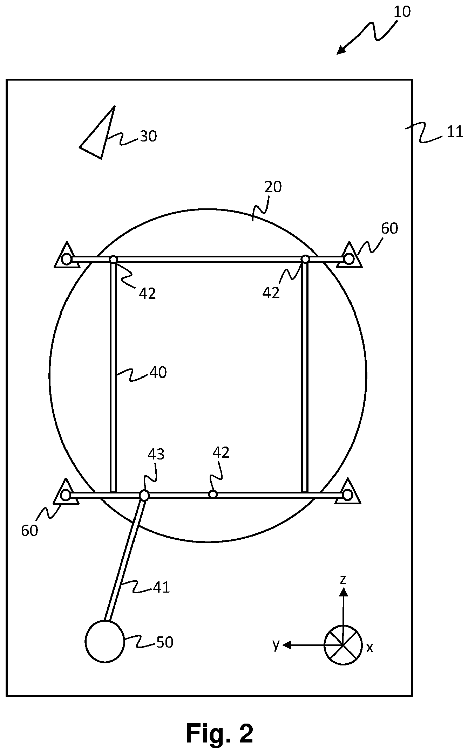

La figure 2 est une représentation schématique simplifiée d'une face 11 d'un satellite 10 avec un réflecteur 20 en position repliée. La source 30 associée au réflecteur 20, la structure 40 de support, le bras 41 de liaison, le dispositif 50 de déploiement et les dispositifs 60 de maintien et de libération du réflecteur 20 sont également représentés sur la figure 2. La figure 2 met également en évidence des points 42 de liaison, par exemple sous la forme d'inserts filetés, permettant de fixer le réflecteur 20 à la structure 40 de support, ainsi qu'un point 43 de liaison du bras 41 avec la partie rectangulaire de la structure 40 de support.

Le dispositif 50 de déploiement permet de faire passer le réflecteur 20 de la position repliée vers la position déployée une fois que le satellite 10 est en orbite et que les dispositifs 60 de maintien et de libération du réflecteur ont libéré le réflecteur. Dans ce but, le dispositif 50 de déploiement permet d'appliquer un mouvement de rotation à l'ensemble formé par la structure 40 de support (incluant le bras 41 de liaison) et le réflecteur 20 autour d'un axe selon la direction y passant par le dispositif 50 de déploiement (mouvement de tangage ou « pitch » en anglais) et autour d'un axe selon la direction x passant par le dispositif 50 de déploiement (mouvement de roulis ou « roll » en anglais). Le mouvement de tangage permet notamment d'écarter le réflecteur 20 de la face 11 du satellite pour que le réflecteur 20 soit positionné face à la Terre. Les mouvements de tangage et de roulis permettent également d'orienter le réflecteur 20 pour pointer vers une zone géographique particulière à la surface de la Terre. Dans l'exemple considéré, lorsque le satellite est en orbite autour de la Terre, la direction z pointe vers le centre de la Terre, la direction x pointe vers l'Est et la direction y pointe vers le Sud. La face 11 représentée sur la figure 2 correspond donc à la face Ouest du satellite.

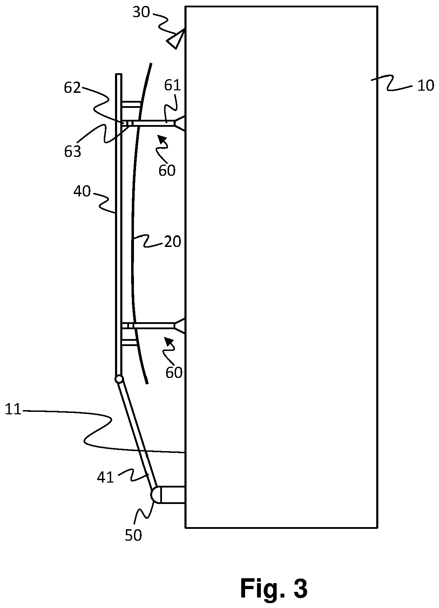

La figure 3 est une représentation schématique d'une vue de profil du satellite 10 illustré à la figure 2 lorsque le réflecteur 20 est en position repliée. Dans l'exemple illustré à la figure 3, chaque dispositif 60 de maintien et de libération du réflecteur 20 comporte une base 61 et une portion 62 détachable sur commande. La base 61 du dispositif 60 de maintien et de libération du réflecteur 20 est fixée à la face 11 du satellite 10. La portion 62 détachable relie la structure 40 de support du réflecteur 20 à la base 61 du dispositif 60 de maintien et de libération par l'intermédiaire d'un élément pyrotechnique 63. Lorsque l'élément pyrotechnique 63 est actionné sur commande, la portion 62 détachable est désolidarisée de la base 61 du dispositif 60 de maintien et de libération. Pour déployer le réflecteur 20, les éléments pyrotechniques 63 des différent dispositifs 60 de maintien et de libération du réflecteur 20 sont actionnés en même temps pour libérer le réflecteur 20. D'autres mécanismes peuvent être envisagés pour détacher la portion 62 détachable. Par exemple, des mécanismes non-explosifs pourraient être utilisés pour commander la séparation de la portion 62 détachable de la base 61 du dispositif 60 de maintien et de libération. Le choix d'un type particulier de dispositifs 60 de maintien et de libération du réflecteur 20 ne correspond qu'à une variante de l'invention.

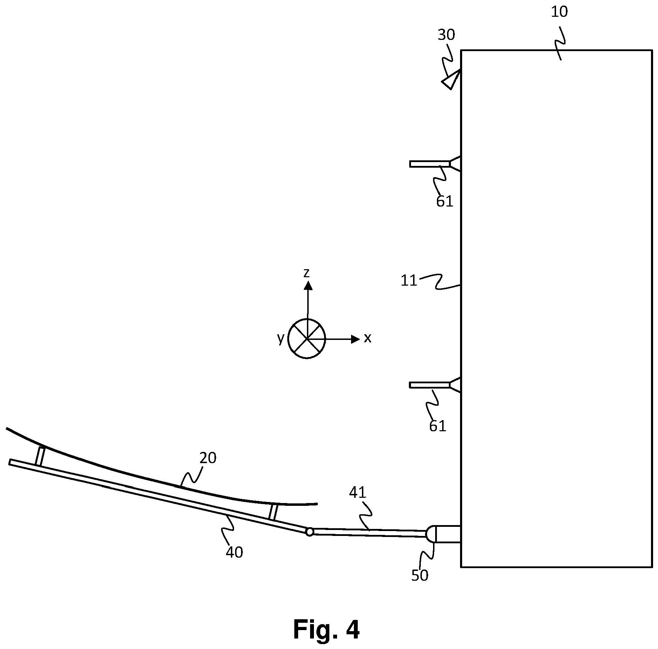

La figure 4 est une représentation schématique d'une vue de profil du satellite 10 illustré à la figure 2 lorsque le réflecteur 20 est en position déployée. Pour être positionné ainsi, le dispositif 50 de déploiement a appliqué au bras 41 un mouvement de rotation autour d'un axe suivant la direction y et passant par le dispositif 50 de déploiement. Le bras 41 a alors entrainé la structure 40 de support et le réflecteur 20 dans une position déployée, à l'écart de la face 11 du satellite, pour que le réflecteur 20 soit positionné face à la Terre. Les bases 61 des dispositifs 60 de maintien et de libération du réflecteur 20, qui restent fixées sur la face 11 du satellite 10 après déploiement du réflecteur 20, sont également représentées sur la figure 4.

Par souci de simplification, les figures 2 à 4 ne représentent qu'un seul réflecteur 20 associé à la face 11 du satellite. Il convient toutefois de noter que la face 11 du satellite peut comporter plusieurs réflecteurs 20. Les réflecteurs 20 sont alors empilés les uns au-dessus des autres en regard de la face 11 du satellite lorsqu'ils sont en position repliée, et ils sont déployés les uns à côté des autres pour faire face à la Terre une fois que le satellite est en orbite. Il convient également de noter que la face du satellite à l'opposé de la face 11 décrite en référence aux figures 2 à 4 peut également comporter un ou plusieurs réflecteurs. Deux faces opposées du satellite peuvent ainsi être totalement ou partiellement symétriques. Les deux faces peuvent par exemple être totalement symétriques si elles comportent le même nombre de réflecteurs 20, les mêmes réflecteurs, et les mêmes éléments positionnés identiquement pour chaque réflecteur (source 30, dispositif 50 de déploiement, dispositifs 60 de maintien et de libération). Les deux faces peuvent être partiellement symétriques par exemple si une face comporte moins de réflecteurs que l'autre ou si des sources 30 radiofréquences différentes sont utilisées pour fonctionner dans des bandes de fréquences différentes (les positions des sources 30 peuvent néanmoins rester symétriques).

La figure 5 est une représentation schématique des principaux paramètres géométriques pour un réflecteur 20. Tel qu'illustré sur la figure 5, la surface réfléchissante du réflecteur 20 s'inscrit dans un paraboloïde 21 de révolution qui a pour sommet un point noté V (vertex du paraboloïde). Le foyer focal du paraboloïde est noté S. La source 30 associée au réflecteur 20 est placée au niveau de ce point focal S. La distance focale F du réflecteur 20 correspond alors à la distance entre le vertex V du paraboloïde 21 et le point focal S du paraboloïde 21. L'axe passant par les points S et V correspond à l'axe focal du paraboloïde 21. Le diamètre du réflecteur 20 est noté D. Tel qu'illustré sur la figure 5, dans la présente demande on entend par « diamètre du réflecteur 20 » le diamètre de la projection du réflecteur dans un plan orthogonal à l'axe focal et passant par le vertex V. L'écartement du réflecteur 20 par rapport à la face 11 du satellite peut être défini par une distance de décalage du réflecteur lorsque le réflecteur 20 est en position déployée. Selon un premier exemple, la distance de décalage peut être définie comme la distance Δ1 entre le vertex V du paraboloïde 21 et le point de la surface réfléchissante du réflecteur 20 qui est le plus proche du vertex V (cette distance est généralement nommée « offset to the edge » ou « clearance » dans la littérature anglo-saxonne). Selon un deuxième exemple, la distance de décalage peut être définie comme la distance Δ2 entre le vertex V du paraboloïde 21 et le centre de la surface réfléchissante du réflecteur 20 (cette distance est généralement nommée « offset » dans la littérature anglo-saxonne). Selon un troisième exemple, la distance de décalage peut être définie comme la distance Δ3 entre la face 11 du satellite et le point de la surface réfléchissante du réflecteur 20 qui est le plus proche de ladite face 11. Il convient de noter qu'à partir du moment où la position de la source 30 par rapport à la face 11 est fixée, les distances Δ1, Δ2 et Δ3 permettent toutes les trois de définir une même position déployée du réflecteur 20, c'est-à-dire à un même écartement du réflecteur 20 par rapport à la face 11 du satellite. La manière de définir la distance de décalage du réflecteur lorsque le réflecteur est en position déployée importe peu. D'autres façons que celles illustrées sur la figure 5 pourrait d'ailleurs être envisagées pour définir une distance de décalage du réflecteur lorsque le réflecteur est en position déployée (par exemple la distance entre la face 11 et le centre de la surface réfléchissante du réflecteur 20).

Pour qu'en position déployée le réflecteur 20 pointe vers le centre de la Terre, il convient que la direction prise par un faisceau issu de la source 30 et réfléchi par le réflecteur 20 soit parallèle à l'axe z. Cette direction (« direction de visée ») est également parallèle à l'axe focal du paraboloïde 21 (c'est-à-dire l'axe passant par la source S et le vertex V).

La position d'un réflecteur 20 par rapport à la face 11 lorsque le réflecteur 20 est en position déployée est ainsi complètement déterminée lorsque la position de la source 30, la distance focale F et la distance de décalage sont fixées. Après avoir également fixé le diamètre du réflecteur 20 et la position du dispositif 50 de déploiement, il devient possible de définir les dimensions de la structure de support 40 et du bras 41 de liaison.

Il convient de noter que dans l'exemple illustré sur la figure 5, le plan contenant le faisceau issu de la source 30, le faisceau réfléchi par le réflecteur 20 et l'axe focal du paraboloïde 21 est orthogonal à la face 11 du satellite. Ce plan n'est cependant pas nécessairement orthogonal à la face 11 du satellite.

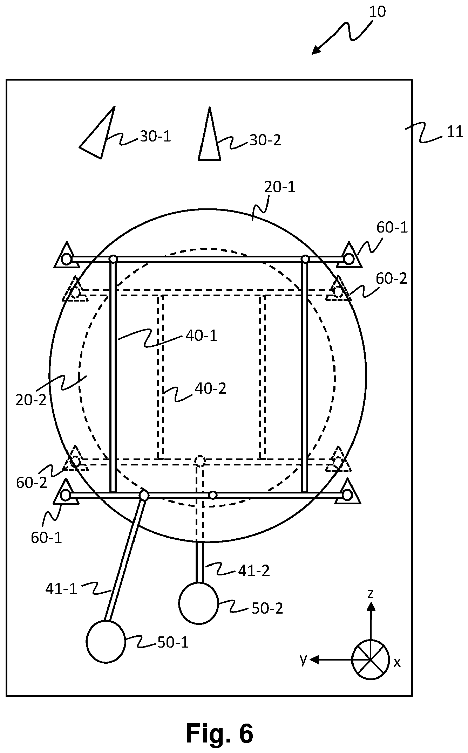

La figure 6 est une représentation schématique d'une face 11 d'un satellite 10 avec deux réflecteurs 20-1, 20-2 empilés en position repliée. Les éléments associés au premier réflecteur 20-1 sont représentés en traits pleins : structure 40-1 de support, bras 41-1 de liaison, dispositifs 60-1 de maintien et de libération, dispositif 50-1 de déploiement, source 30-1 radiofréquences. Les éléments associés au deuxième réflecteur 20-2 sont représentés en traits pointillés : structure 40-2 de support, bras 41-2 de liaison, dispositifs 60-2 de maintien et de libération, dispositif 50-2 de déploiement, source 30-2 radiofréquences. Dans l'exemple illustré à la figure 6, le premier réflecteur 20-1 est empilé au-dessus du deuxième réflecteur 20-2 lorsque les réflecteurs 20-1, 20-2 sont en position repliée. Dans l'exemple illustré à la figure 6, le premier réflecteur 20-1 présente un diamètre plus grand que le deuxième réflecteur 20-2. Rien n'empêche cependant que tous les réflecteurs aient le même diamètre.

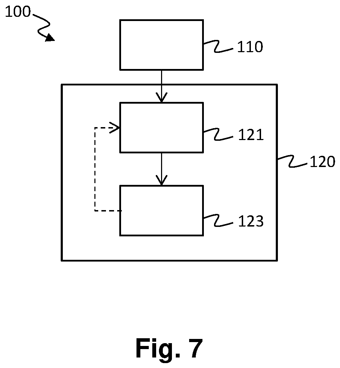

La figure 7 illustre schématiquement les principales étapes du procédé 100 de fabrication d'un satellite 10 selon l'invention.

Le procédé 100 de fabrication comprend tout d'abord une étape préalable de détermination 110 d'une configuration générique, indépendamment de la mission du satellite, c'est-à-dire indépendamment de la ou des zones géographiques associées à la mission du satellite, en fixant au moins les paramètres suivants pour chaque réflecteur 20 associé à une face 11 du satellite 10 :
- diamètre du réflecteur 20,
- distance focale du réflecteur 20,
- distance de décalage du réflecteur 20 lorsque le réflecteur 20 est en position déployée,
- position du dispositif 50 de déploiement sur la face 11 du satellite 10,
- position de la source 30 associée audit réflecteur 20 sur la face 11 du satellite 10.
Les différents paramètres susmentionnés sont déterminés de telle sorte qu'un faisceau issu de la source 30 pointe vers le centre de la Terre lorsque le réflecteur 20 est en position déployée.

Le procédé de fabrication comprend ensuite une étape de configuration spécifique 120, en fonction de la mission du satellite, c'est-à-dire en fonction de la ou des zones géographiques associées à la mission du satellite. L'étape de configuration spécifique 120 comprend les sous-étapes suivantes pour chaque réflecteur 20 :
- une détermination 121 d'une position déployée ajustée du réflecteur 20 obtenue par pilotage du dispositif 50 de déploiement, de sorte qu'un faisceau issu de la source 30 pointe vers une zone géographique particulière de la mission du satellite,
- une conformation 123 de la surface du réflecteur 20 en fonction de la zone géographique à couvrir et en fonction de la position déployée ajustée ainsi déterminée.

Il est important de noter que l'étape de configuration spécifique est mise en oeuvre sans modifier les paramètres fixés pendant l'étape préalable de détermination 110 de la configuration générique.

En d'autres termes, le procédé 100 de fabrication d'un satellite 10 selon l'invention consiste à réutiliser une configuration générique qui a été définie indépendamment d'une mission particulière, et à définir un nombre limité de paramètres particuliers en fonction de la mission spécifique du satellite. La configuration générique est déterminée de telle sorte que chaque antenne pointe par défaut vers le centre de la Terre. La configuration spécifique est ensuite rendue possible par un pilotage du dispositif de déploiement, c'est-à-dire par une modification du pointage de l'antenne une fois que le réflecteur est déployé. La configuration générique peut être réutilisée pour chaque nouveau satellite à fabriquer, et pour chaque face du satellite qui doit comporter des antennes à réflecteur. Seule la configuration spécifique doit être redéfinie pour un nouveau satellite à fabriquer et/ou pour chaque face du satellite.

Le procédé 100 de fabrication selon l'invention est rendu possible par l'utilisation d'un dispositif 50 de déploiement qui présente une marge de pilotage (« steering » dans la littérature anglo-saxonne) en tangage (« pitch ») et en roulis (« roll ») suffisante pour pouvoir orienter chaque réflecteur 20, en partant de la position déployée par défaut, pour pointer vers n'importe quelle zone géographique à la surface de la Terre qui soit visible par le satellite 10 une fois que le satellite est en orbite.

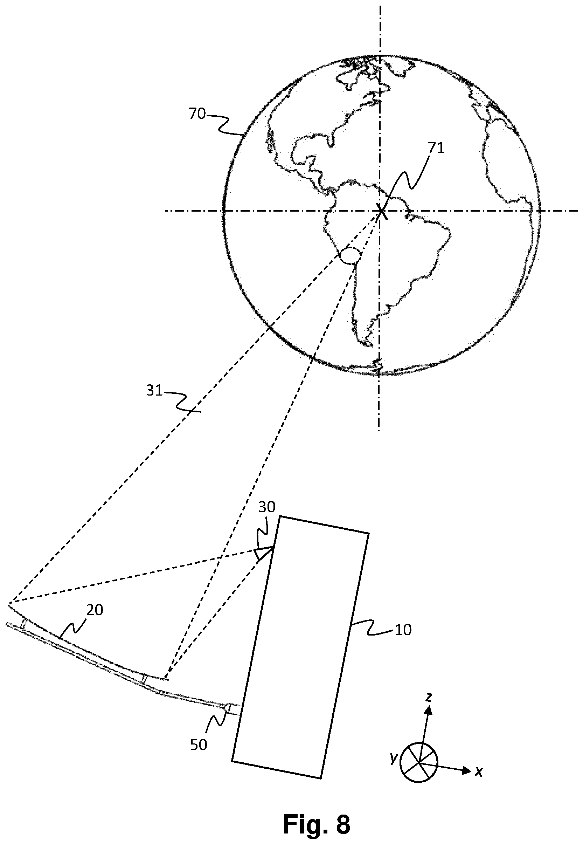

La figure 8 illustre schématiquement un satellite 10 en orbite autour de la Terre 70 avec un réflecteur 20 en position déployée selon une configuration générique. Tel qu'illustré sur la figure 8, la configuration générique est déterminée de sorte qu'un faisceau 31 issu de la source 30 radiofréquences associée au réflecteur 20 pointe vers le centre 71 de la Terre 70 lorsque le réflecteur 20 est dans la position déployée par défaut. Tel qu'illustré sur la figure 8, le faisceau 31 est réfléchi par le réflecteur 20 pour être dirigé vers la Terre 70.

Dans la configuration générique, la position déployée par défaut d'un réflecteur 20 est donc définie par l'angle de tangage et l'angle de roulis que le dispositif 50 de déploiement doit appliquer pour placer le réflecteur 20 dans une position telle qu'un faisceau 31 issu de la source 30 radiofréquences associée au réflecteur 20 pointe vers le centre 71 de la Terre 70.

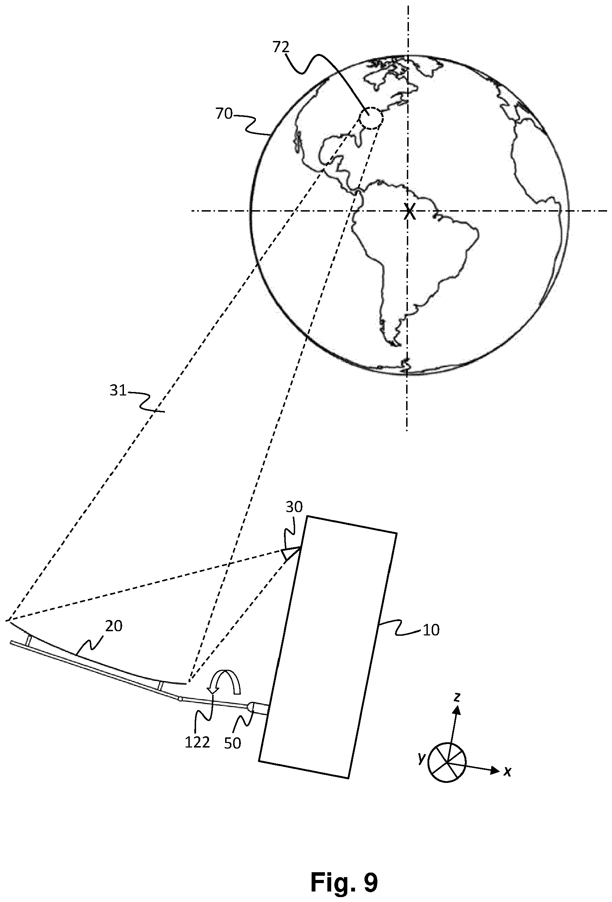

La figure 9 met en évidence l'étape de pilotage 122 du dispositif 50 de déploiement du réflecteur 20 pour placer le réflecteur 20 dans une position déployée ajustée. Au cours de cette étape, un mouvement de tangage et/ou de roulis additionnel est appliqué par le dispositif 50 de déploiement au bras 41 de liaison pour placer le réflecteur 20 dans une position pour laquelle un faisceau 31 issu de la source 30 radiofréquences et réfléchi par le réflecteur 20 couvre une zone géographique 72 particulière appartenant à la mission du satellite.

La position déployée ajustée d'un réflecteur 20 déterminée pendant l'étape de configuration spécifique 120 est donc définie par l'angle de tangage et l'angle de roulis que le dispositif 50 de déploiement doit appliquer pour placer le réflecteur 20 dans une position telle qu'un faisceau 31 issu de la source 30 radiofréquences associée au réflecteur 20 pointe vers une zone géographique 72 particulière après réflexion sur le réflecteur 20.

La sous-étape de conformation 123 du réflecteur 20 pendant l'étape de configuration spécifique 120 permet d'optimiser le contour de la zone couverte par le faisceau 31 pour couvrir au mieux la zone géographique 72. Tel qu'illustré sur la figure 7, les sous-étapes de détermination 121 d'une position déployée ajustée et de conformation 123 de la surface du réflecteur peuvent être itérées plusieurs fois pendant la phase de configuration spécifique pour optimiser les performances de l'antenne.

Il convient de noter que la sous-étape de conformation 123 n'est pas absolument indispensable à l'invention (notamment si on applique l'invention à des antennes de type SFPB ou MFPB). Toutefois, cette sous-étape de conformation 123 est particulièrement avantageuse puisqu'elle permet de compenser le fait que l'antenne a été initialement conçue pour pointer par défaut vers le centre 71 de la Terre 72, et non pas vers une zone géographique 72 spécifique.

Le nombre de paramètres à définir pour la configuration spécifique est très limité comparativement aux procédés conventionnels pour lesquels l'ensemble de tous les paramètres relatifs à tous les éléments présents sur la face du satellite doivent être définis. Le fait de réutiliser la configuration générique permet ainsi de faciliter la phase d'intégration des antennes lors de la fabrication du satellite.

Le diamètre et la distance focale de chaque réflecteur 20 sont fixés par la configuration générique. Il est avantageux de prévoir une configuration générique avec des réflecteurs présentant un diamètre relativement grand. Il y a aura ainsi plus de flexibilité dans le choix des missions qui pourront être remplies par un satellite fabriqué à partir de cette configuration générique. Un réflecteur de grand diamètre peut en effet être utilisé pour couvrir des zones géographiques pour lesquelles un réflecteur de diamètre plus faible aurait suffi. Dans des modes préférés de mise en oeuvre, les réflecteurs 20 ont un diamètre compris entre 220 et 270 centimètres.

Le fait de fixer la position des sources 30 radiofréquences sur la face 11 dans la configuration générique permet de standardiser la position des différentes interfaces avec ces sources 30 dans le satellite (guides d'ondes, dispositifs de fixation des sources, etc.).

Le fait de fixer la position des dispositifs 50 de déploiement sur la face 11 dans la configuration générique est également avantageux car l'étude des contraintes techniques relatives à la position de ces dispositifs sur le satellite ne sera à faire qu'une seule fois (et non plus à chaque fois qu'un nouveau satellite est fabriqué).

Dans des modes particuliers de mise en oeuvre, les positions des différents dispositifs 60 de maintien et de libération des réflecteurs 20 sont également fixées dans la configuration générique.

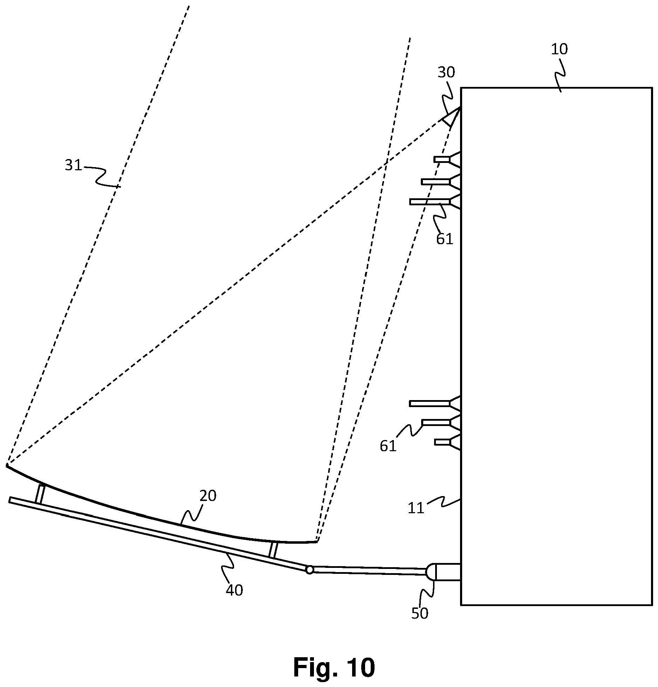

La position des dispositifs 60 de maintien et de libération des réflecteurs 20 peut avoir un impact sur les performances des sources 30 radiofréquences. Tel qu'illustré sur la figure 10, une fois que les réflecteurs 20 sont déployés, les bases 61 des dispositifs 60 de maintien et de libération fixées sur la face 11 du satellite 10 peuvent se trouver au moins partiellement à l'intérieur d'un faisceau 31 radio issu d'une source 30 radiofréquences et provoquer des interférences. C'est pourquoi il est généralement nécessaire, pendant la conception du satellite, de faire une étude de l'impact de ces dispositifs 60 de maintien et de libération sur un signal radio émis par une source 30, et de prendre les mesures nécessaires pour compenser cet impact au niveau de la chaîne de transmission ou de réception radio. Là encore, en figeant la position des différents éléments dans la configuration générique, cette étude ne sera à faire qu'une seule fois, et non plus à chaque fois qu'un nouveau satellite est conçu.

Il est avantageux de réduire le nombre des dispositifs 60 de maintien et de libération pour limiter leur impact sur un signal radio émis par une source 30 radiofréquences. Dans l'exemple illustré à la figure 10, il y a quatre dispositifs 60 de maintien et de libération pour chaque réflecteur 20. Comme il y a trois réflecteurs dans l'exemple considéré, cela fait un total de douze dispositifs 60 de maintien et de libération sur la face 11 du satellite.

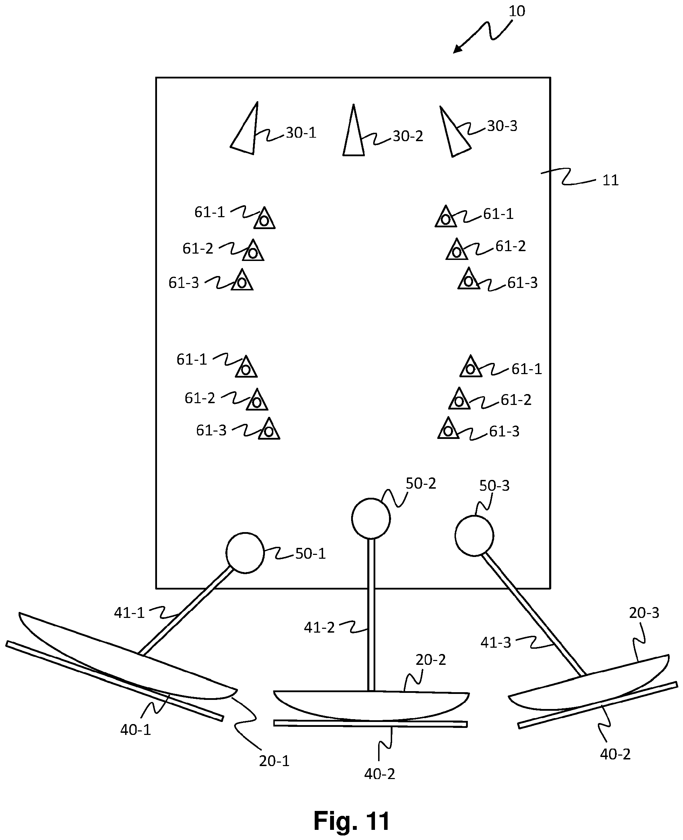

La figure 11 représente schématiquement une face 11 d'un satellite 10 avec trois réflecteurs 20-1, 20-2, 20-3 en position déployée lorsque des dispositifs de maintien et de libération différents sont utilisés pour les différents réflecteurs. Tel qu'illustré sur la figure 11, après déploiement il reste sur la face 11 les bases 61-1 de quatre dispositifs de maintien et de libération associés au premier réflecteur 20-1, les bases 61-2 de quatre autres dispositifs de maintien et de libération associés au deuxième réflecteur 20-2, et les bases 61-3 d'encore quatre autres dispositifs de maintien et de libération associés au troisième réflecteur 20-3.

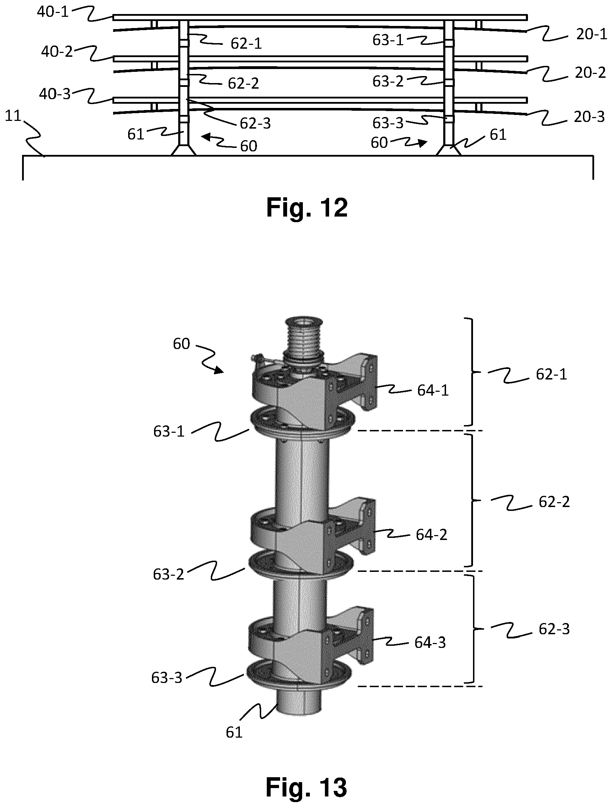

Dans des modes particuliers de mise en oeuvre, et tel qu'illustré sur la figure 12, les réflecteurs 20 partagent les mêmes dispositifs 60 de maintien et de libération. La figure 12 représente trois réflecteurs 20-1, 20-2, 20-3 empilés en position repliée sur une face 11 du satellite 10. Les trois réflecteurs partagent les mêmes dispositifs 60 de maintien et de libération. Ainsi, seuls quatre dispositifs 60 de maintien et de libération sont nécessaires pour les trois réflecteurs 20-1, 20-2, 20-3. Dans ce but, chaque dispositif 60 de maintien et de libération comporte par exemple trois parties détachables 62-1, 62-2, 62-3 et trois éléments pyrotechniques 63-1, 63-2, 63-3. Pour déployer les réflecteurs, le premier élément pyrotechnique 63-1 de chaque dispositif 60 de maintien et de libération est activé, ce qui permet de détacher la première partie détachable 62-1 de chaque dispositif 60 de maintien et de libération pour libérer le premier réflecteur 20-1. Ensuite, le deuxième élément pyrotechnique 63-2 de chaque dispositif 60 de maintien et de libération est activé, ce qui permet de détacher la deuxième partie détachable 62-2 de chaque dispositif 60 de maintien et de libération pour libérer le deuxième réflecteur 20-2. Enfin, le troisième élément pyrotechnique 63-3 de chaque dispositif 60 de maintien et de libération est activé, ce qui permet de détacher la troisième partie détachable 62-3 de chaque dispositif 60 de maintien et de libération pour libérer le troisième réflecteur 20-3. Avec de telles dispositions, seuls quatre dispositifs 60 de maintien et de libération sont nécessaires pour l'ensemble des trois réflecteurs 20-1, 20-2, 20-3.

La figure 13 représente un exemple de dispositif 60 de maintien et de libération destiné à être associé à trois réflecteurs différents. Tel qu'illustré sur la figure 13, chaque partie détachable 62-1, 62-2, 62-3 comporte respectivement un élément de fixation 64-1, 64-2, 64-3 pour fixer la partie détachable au réflecteur associé. Sur l'exemple illustré à la figure 13, un élément de fixation 64-1, 64-2, 64-3 comporte une surface métallique avec des trous pour accueillir par exemple des boulons ou des rivets. La base 61 du dispositif 60 de maintien et de libération est destinée à être fixée sur la face 11 du satellite.

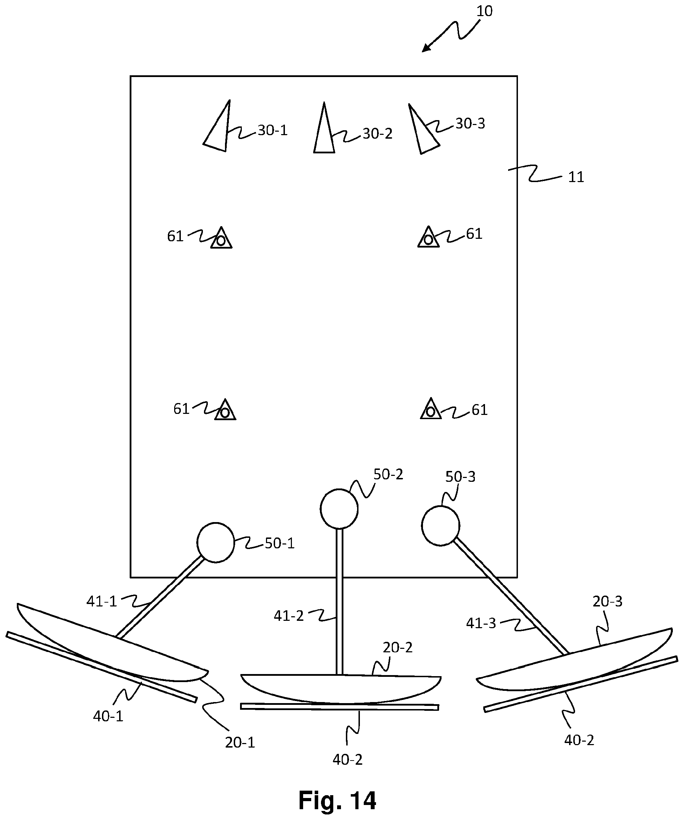

La figure 14 représente schématiquement la face 11 de satellite décrite en référence à la figure 12 lorsque les trois réflecteurs 20-1, 20-2, 20-3 sont en position déployée. Après déploiement, il reste sur la face 11 uniquement les bases 61 de quatre dispositifs de maintien et de libération associés aux trois réflecteurs 20-1, 20-2 et 20-3.

Il convient de noter que dans l'exemple illustré sur les figures 12 et 14, les différents réflecteurs 20-1, 20-2, 20-3 ont sensiblement le même diamètre. Rien n'empêche cependant que des réflecteurs de diamètres différents puissent quand même partager les mêmes dispositifs de maintien et de libération. Dans un tel cas, les structures de support associés aux différents réflecteurs ont par exemple des dimensions différentes pour pouvoir être attachés aux éléments de fixation 64-1, 64-2, 64-3 des dispositifs 60 de maintien et de libération partagés entre les différents réflecteurs.

Le procédé 100 selon l'invention est particulièrement bien adapté pour obtenir une configuration dans laquelle les réflecteurs partagent les mêmes dispositifs de déploiement et de libération, et/ou dans laquelle les réflecteurs sont concentriques lorsqu'ils sont en position repliée (tel qu'illustré sur la figure 6), et/ou dans laquelle les sources sont alignées (tel qu'illustré dans les figures 1, 6, 11 et 14), et/ou dans laquelle les dispositifs de déploiement sont alignés.

La description ci-avant illustre clairement que, par ses différentes caractéristiques et leurs avantages, la présente invention atteint les objectifs fixés en proposant un procédé qui facilite la phase d'intégration des antennes pendant la conception d'un satellite.

Notamment, le choix du nombre de réflecteurs 20 agencés sur une face 11 du satellite, le choix d'une forme particulière pour la structure 40 de support d'un réflecteur 20, le choix du nombre et/ou du type de dispositifs 60 de maintien et de libération d'un réflecteur 20, le choix d'un type particulier de source 30 radiofréquences ou de dispositifs 50 de déploiement, ne constituent que des variantes de l'invention.

L'invention a été décrite en considérant la fabrication d'un satellite de télécommunications destiné à être placé en orbite géostationnaire autour de la Terre. Rien n'exclut cependant, suivant d'autres exemples, d'appliquer la présente invention à la fabrication d'un autre type de satellite, éventuellement destiné à être placé en orbite non géostationnaire, voire en orbite autour d'un autre corps céleste que la Terre.

## Revendications

1. Procédé (100) de fabrication d'un satellite (10) destiné à être placé en orbite géostationnaire autour de la Terre (70) pour accomplir une mission associée à une ou plusieurs zones géographiques (72) à la surface de la Terre (70), ledit satellite (10) comprenant un ou plusieurs réflecteurs (20) sur une face (11) du satellite, chaque réflecteur étant relié à ladite face (11) du satellite par l'intermédiaire d'un dispositif (50) de déploiement permettant de faire passer le réflecteur (20) d'une position repliée à une position déployée, les réflecteurs (20) étant empilés l'un au-dessus de l'autre en regard de la face (11) du satellite lorsqu'il y a plusieurs réflecteurs et lorsque les réflecteurs sont en position repliée, chaque réflecteur (20) étant associé à une source (30) d'émission ou de réception radiofréquences pour former un faisceau (31) transportant un signal radio vers ou en provenance d'une zone géographique (72) à la surface de la Terre, ledit procédé (100) de fabrication comprenant :
• une étape préalable de détermination (110) d'une configuration générique, indépendamment de la mission du satellite, en fixant au moins les paramètres suivants pour chaque réflecteur (20) :
- diamètre du réflecteur,
- distance focale du réflecteur,
- distance de décalage du réflecteur lorsque le réflecteur est en position déployée,
- position du dispositif (50) de déploiement sur la face du satellite,
- position de la source (30) associée audit réflecteur sur la face du satellite, de sorte qu'un faisceau (31) issu de la source (30) pointe vers le centre (71) de la Terre (70) lorsque le satellite (10) est en orbite et le réflecteur (20) est en position déployée,
• une étape de configuration spécifique (120), en fonction de la mission du satellite, comprenant les sous-étapes suivantes pour chaque réflecteur (20):
- une détermination (121) d'une position déployée ajustée du réflecteur (20) obtenue par pilotage (122) du dispositif de déploiement (50), de sorte qu'un faisceau (31) issu de la source (30) pointe vers une zone géographique (72) de la mission du satellite lorsque le satellite (10) est en orbite et le réflecteur (20) est en position déployée ajustée,
- une conformation (123) de la surface du réflecteur (20) en fonction de ladite zone géographique (72) et en fonction de la position déployée ajustée ainsi déterminée,
l'étape de configuration spécifique (120) étant mise en oeuvre sans modifier les paramètres fixés pendant l'étape préalable de détermination (110) de la configuration générique.

2. Procédé (100) selon la revendication 1 dans lequel, chaque réflecteur (20) est associé à des dispositifs (60) de maintien et de libération comprenant une portion (62) détachable sur commande et permettant de maintenir le réflecteur (20) en position repliée pendant une phase de lancement du satellite et de libérer le réflecteur (20) en position déployée une fois que le satellite est en orbite, et l'étape préalable de détermination (110) d'une configuration générique comprend également de fixer, pour chaque réflecteur (20), la position des dispositifs (60) de maintien et de libération sur la face (11) du satellite (10).

3. Procédé (100) selon l'une des revendications précédentes dans lequel la face (11) comporte au moins deux réflecteurs (20).

4. Procédé (100) selon les revendications 2 et 3 dans lequel les réflecteurs (20) partagent les mêmes dispositifs (60) de maintien et de libération.

5. Procédé (100) selon l'une des revendications 3 ou 4 dans lequel les réflecteurs ont un diamètre compris entre 220 et 270 centimètres.

6. Procédé (100) selon l'une des revendications 1 à 5 dans lequel la configuration spécifique (120) est optimisée en itérant plusieurs fois les sous-étapes de détermination (121) d'une position déployée ajustée et de conformation (123) de la surface du réflecteur.

7. Face (11) pour fabriquer, selon un procédé selon l'une des revendications 1 à 6, un satellite (10) destiné à être placé en orbite géostationnaire autour de la Terre (70), ladite face (11) comportant :
- un ou plusieurs réflecteurs (20), chaque réflecteur (20) étant relié à ladite face (11) du satellite par l'intermédiaire d'un dispositif (50) de déploiement permettant de faire passer le réflecteur (20) d'une position repliée à une position déployée, les réflecteurs (20) étant empilés l'un au-dessus de l'autre en regard de la face (11) du satellite lorsqu'il y a plusieurs réflecteurs et lorsque les réflecteurs sont en position repliée,
- pour chaque réflecteur (20), une source (30) d'émission ou de réception radiofréquences pour former un faisceau (31) transportant un signal radio vers ou en provenance de la Terre (70),
ladite face (11) étant **caractérisée en ce que**
- chaque réflecteur (20), chaque source (30) et chaque dispositif (50) de déploiement sont agencés pour qu'un faisceau (31) issu d'une source (30) pointe vers le centre (71) de la Terre (70) lorsque le satellite (10) est en orbite et le réflecteur (20) associé est dans une position déployée par défaut,
- chaque dispositif (50) de déploiement est configuré pour déplacer chaque réflecteur (20) dans une position déployée ajustée à laquelle le réflecteur (20) pointe vers une zone géographique (72) spécifique correspondant à une mission du satellite.

8. Face (11) selon la revendication 7 comportant entre un et trois réflecteurs (20), chaque réflecteur (20) satisfaisant à l'un des ensembles de paramètres suivants, chaque ensemble de paramètres comportant un diamètre du réflecteur, une distance focale du réflecteur, et une distance de décalage (Δ1) mesurée entre le sommet (V) d'un paraboloïde dans lequel s'inscrit le réflecteur (20) et l'extrémité du réflecteur (20) la plus proche dudit sommet (V) :
- diamètre compris entre 220 et 270 centimètres, distance focale comprise entre 380 et 420 centimètres, distance de décalage comprise entre 65 et 105 centimètres,
- diamètre compris entre 220 et 270 centimètres, distance focale comprise entre 358 et 398 centimètres, distance de décalage comprise entre 90 et 130 centimètres,
- diamètre compris entre 220 et 270 centimètres, distance focale comprise entre 375 et 415 centimètres, distance de décalage comprise entre 90 et 130 centimètres.

9. Face (11) selon l'une des revendications 7 ou 8 dans laquelle la face (11) comporte au moins deux réflecteurs (20).

10. Face (11) selon la revendication 9, ladite face (11) comportant en outre des dispositifs (60) de maintien et de libération comprenant une portion (62) détachable sur commande et permettant de maintenir les réflecteurs (20) en position repliée pendant une phase de lancement du satellite et de libérer les réflecteurs (20) en position déployée une fois que le satellite est en orbite, les différents réflecteurs (20) partageant les mêmes dispositifs (60) de maintien et de libération.

11. Face (11) selon l'une des revendications 9 ou 10 dans laquelle les réflecteurs (20) sont concentriques lorsque les réflecteurs (20) sont en position repliée.

12. Face (11) selon l'une des revendications 9 à 11 dans laquelle les sources (30) et/ou les dispositifs (50) de déploiement sont alignés selon un axe transversal de la face (11).

13. Satellite (10) comportant une face (11) selon l'une des revendications 7 à 12.

## Patentansprüche

1. Verfahren (100) zur Herstellung eines Satelliten (10), der dazu bestimmt ist, in der geostationären Umlaufbahn um die Erde (70) platziert zu werden, um eine Mission zu erfüllen, die einer oder mehreren geografischen Zonen (72) auf der Oberfläche der Erde (70) zugewiesen ist, wobei der Satellit (10) einen oder mehrere Reflektoren (20) auf einer Seite (11) des Satelliten umfasst, wobei jeder Reflektor anhand einer Entfaltungsvorrichtung (50) mit der Seite (11) des Satelliten verbunden ist, die es ermöglicht, den Reflektor (20) von einer eingeklappten Position in eine entfaltete Position übergehen zu lassen, wobei die Reflektoren (20) gegenüber der Seite (11) des Satelliten übereinander gestapelt sind, wenn mehrere Reflektoren vorhanden sind, und wenn die Reflektoren in eingeklappter Position sind, wobei jeder Reflektor (20) einer Funkfrequenz-Emissions- oder Empfangsquelle (30) zugewiesen ist, um einen Strahl (31) zu bilden, der ein Funksignal zu oder von einer geografischen Zone (72) auf der Oberfläche der Erde transportiert, wobei das Verfahren (100) zur Herstellung Folgendes umfasst:
• einen vorhergehenden Schritt zum Bestimmen (110) einer generischen Konfiguration unabhängig von der Mission des Satelliten, indem mindestens die folgenden Parameter für jeden Reflektor (20) fixiert werden:
- Durchmesser des Reflektors,
- Brennweite des Reflektors,
- Versatzstrecke des Reflektors, wenn der Reflektor in der entfalteten Position ist,
- Position der Entfaltungsvorrichtung (50) auf der Seite des Satelliten,
- Position der Quelle (30), die dem Reflektor auf der Seite des Satelliten zugewiesen ist, sodass ein aus der Quelle (30) stammender Strahl (31) zur Mitte (71) der Erde (70) zeigt, wenn der Satellit (10) in der Umlaufbahn ist, und der Reflektor (20) in der entfalteten Position ist,
• einen besonderen Konfigurationsschritt (120) in Abhängigkeit von der Mission des Satelliten, der die folgenden Teilschritte für jeden Reflektor (20) umfasst:
- eine Bestimmung (121) einer angepassten entfalteten Position des Reflektors (20), die durch Steuern (122) der Entfaltungsvorrichtung (50) erhalten wird, sodass ein aus der Quelle (30) stammender Strahl (31) in eine geografische Zone (72) der Mission des Satelliten zeigt, wenn der Satellit (10) in der Umlaufbahn ist, und der Reflektor (20) in angepasster entfalteter Position ist,
- eine Gestaltung (123) der Oberfläche des Reflektors (20) in Abhängigkeit von der geografischen Zone (72) und in Abhängigkeit von der so bestimmten angepassten entfalteten Position,
wobei der besondere Konfigurationsschritt (120) umgesetzt wird, ohne die Parameter zu ändern, die während des vorhergehenden Schrittes zum Bestimmen (110) der generischen Konfiguration fixiert werden.

2. Verfahren (100) nach Anspruch 1, wobei jeder Reflektor (20) Vorrichtungen (60) zum Festhalten und Freigeben zugewiesen ist, die einen Abschnitt (62) umfassen, der auf Befehl lösbar ist, und es ermöglicht, den Reflektor (20) während einer Startphase des Satelliten in der eingeklappten Position festzuhalten, und den Reflektor (20) in die entfaltete Position freizugeben, sobald sich der Satellit in der Umlaufbahn befindet, und der vorhergehende Schritt zum Bestimmen (110) einer generischen Konfiguration es ebenfalls umfasst, für jeden Reflektor (20) die Position der Vorrichtungen (60) zum Festhalten und Freigeben auf der Seite (11) des Satelliten (10) zu fixieren.

3. Verfahren (100) nach einem der vorstehenden Ansprüche, wobei die Seite (11) mindestens zwei Reflektoren (20) beinhaltet.

4. Verfahren (100) nach einem der Ansprüche 2 und 3, wobei die Reflektoren (20) dieselben Vorrichtungen (60) zum Festhalten und Freigeben teilen.

5. Verfahren (100) nach einem der Ansprüche 3 oder 4, wobei die Reflektoren einen Durchmesser aufweisen, der zwischen 220 und 270 Zentimetern liegt.

6. Verfahren (100) nach einem der Ansprüche 1 bis 5, wobei die besondere Konfiguration (120) durch mehrmaliges Iterieren der Teilschritte zum Bestimmen (121) einer angepassten entfalteten Position und des Gestaltens (123) der Oberfläche des Reflektors optimiert wird.

7. Seite (11) zum Herstellen eines Satelliten (10), entsprechend einem Verfahren nach einem der Ansprüche 1 bis 6, wobei der Satellit dazu bestimmt ist, in der geostationären Umlaufbahn um die Erde (70) platziert zu werden, wobei die Seite (11) Folgendes beinhaltet:
- einen oder mehrere Reflektoren (20), wobei jeder Reflektor (20) anhand einer Entfaltungsvorrichtung (50) mit der Seite (11) des Satelliten verbunden ist, die es ermöglicht, den Reflektor (20) von einer eingeklappten Position in eine entfaltete Position übergehen zu lassen, wobei die Reflektoren (20) gegenüber der Seite (11) des Satelliten übereinandergestapelt sind, wenn mehrere Reflektoren vorhanden sind, und wenn die Reflektoren in eingeklappter Position sind,
- für jeden Reflektor (20) eine Funkfrequenz-Emissions-oder Empfangsquelle (30) zum Bilden eines Strahls (31), der ein Funksignal zu oder von der Erde (70) transportiert, wobei die Seite (11) **dadurch gekennzeichnet ist, dass**
- jeder Reflektor (20), jede Quelle (30) und jede Entfaltungsvorrichtung (50) angeordnet sind, damit ein aus einer Quelle (30) stammender Strahl (31) zur Mitte (71) der Erde (70) zeigt, wenn der Satellit (10) in der Umlaufbahn ist, und der zugewiesene Reflektor (20) standardgemäß in einer entfalteten Position ist,
- jede Entfaltungsvorrichtung (50) konfiguriert ist, um jeden Reflektor (20) in eine angepasste entfaltete Position zu verschieben, in der Reflektor (20) in eine besondere geografische Zone (72), die einer Mission des Satelliten entspricht, zeigt.

8. Seite (11) nach Anspruch 7, die zwischen einem und drei Reflektoren (20) beinhaltet, wobei jeder Reflektor (20) einen der folgenden Parameter erfüllt, wobei jede Einheit an Parametern einen Durchmesser des Reflektors, eine Brennweite des Reflektors, und eine Versatzstrecke (Δ1) beinhaltet, die zwischen dem Scheitel (V) eines Paraboloids, in dem der Reflektor (20) angelegt ist, und dem dem Scheitel (V) am nächsten gelegenen Ende des Reflektors (20) gemessen wird:
- Durchmesser liegt zwischen 220 und 270 Zentimetern, Brennweite liegt zwischen 380 und 420 Zentimetern, Versatzstrecke liegt zwischen 65 und 105 Zentimetern,
- Durchmesser liegt zwischen 220 und 270 Zentimetern, Brennweite liegt zwischen 358 und 398 Zentimetern, Versatzstrecke liegt zwischen 90 und 130 Zentimetern,
- Durchmesser liegt zwischen 220 und 270 Zentimetern, Brennweite liegt zwischen 375 und 415 Zentimetern, Versatzstrecke liegt zwischen 90 und 130 Zentimetern.

9. Seite (11) nach einem der Ansprüche 7 oder 8, wobei die Seite (11) mindestens zwei Reflektoren (20) beinhaltet.

10. Seite (11) nach Anspruch 9, wobei die Seite (11) weiter Vorrichtungen (60) zum Festhalten und Freigeben beinhaltet, die einen Abschnitt (62) umfassen, der auf Befehl lösbar ist, und es ermöglicht, die Reflektoren (20) während einer Startphase des Satelliten in der eingeklappten Position festzuhalten, und die Reflektoren (20) in die entfaltete Position freizugeben, sobald sich der Satellit in der Umlaufbahn befindet, wobei die verschiedenen Reflektoren (20) dieselben Vorrichtungen (60) zum Festhalten und Freigeben teilen.

11. Seite (11) nach einem der Ansprüche 9 oder 10, wobei die Reflektoren (20) konzentrisch sind, wenn die Reflektoren (20) in der eingeklappten Position sind.

12. Seite (11) nach einem der Ansprüche 9 bis 11, wobei die Quellen (30) und/oder die Entfaltungsvorrichtungen (50) entlang einer Querachse der Seite (11) ausgerichtet sind.

13. Satellit (10), der eine Seite (11) nach einem der Ansprüche 7 bis 12 beinhaltet.

## Claims

1. Method (100) for manufacturing a satellite (10) intended to be placed in geostationary orbit around the Earth (70) to carry out a mission associated with one or more geographic zones (72) on the surface of the Earth (70), said satellite (10) comprising one or more reflectors (20) on a face (11) of the satellite, each reflector being connected to said face (11) of the satellite via a deployment device (50) allowing to make the reflector (20) go from a retracted position to a deployed position, the reflectors (20) being stacked above one another facing the face (11) of the satellite when there are several reflectors and when the reflectors are in the retracted position, each reflector (20) being associated with a radiofrequency source (30) for emission or for reception to form a beam (31) carrying a radio signal to or from a geographic zone (72) on the surface of the Earth, said manufacturing method (100) comprising:
• a preliminary step of determining (110) a generic configuration, independently of the mission of the satellite, by setting at least the following parameters for each reflector (20):
- diameter of the reflector,
- focal distance of the reflector,
- offset distance of the reflector when the reflector is in the deployed position,
- position of the deployment device (50) on the face of the satellite,
- position of the source (30) associated with said reflector on the face of the satellite,
in such a way that a beam (31) coming from the source (30) is aimed at the centre (71) of the Earth (70) when the satellite (10) is in orbit and the reflector (20) is in the deployed position,
• a specific configuration step (120), according to the mission of the satellite, comprising the following substeps for each reflector (20):
- determining (121) an adjusted deployed position of the reflector (20) obtained by controlling (122) the deployment device (50), so that a beam (31) coming from the source (30) is aimed at a geographic zone (72) of the mission of the satellite when the satellite (10) is in orbit and the reflector (20) is in the adjusted deployed position,
- shaping (123) the surface of the reflector (20) according to said geographic zone (72) and according to the adjusted deployed position thus determined, the specific configuration step (120) being implemented without modifying the parameters set during the preliminary step of determining (110) the generic configuration.

2. Method (100) according to claim 1, wherein each reflector (20) is associated with holding and releasing devices (60) comprising a portion (62) detachable on command and allowing to hold the reflector (20) in the retracted position during a phase of launch of the satellite and release the reflector (20) into the deployed position once the satellite is in orbit, and the preliminary step of determining (110) a generic configuration also comprises setting, for each reflector (20), the position of the holding and releasing devices (60) on the face (11) of the satellite (10).

3. Method (100) according to one of the previous claims, wherein the face (11) includes at least two reflectors (20).

4. Method (100) according to claims 2 and 3, wherein the reflectors (20) share the same holding and releasing devices (60).

5. Method (100) according to one of claims 3 or 4, wherein the reflectors have a diameter between 220 and 270 centimetres.

6. Method (100) according to one of claims 1 to 5, wherein the specific configuration (120) is optimised by iterating several times the substeps of determining (121) an adjusted deployed position and shaping (123) the surface of the reflector.

7. Face (11) for manufacturing, according to a method according to one of claims 1 to 6, a satellite (10) intended to be placed in geostationary orbit around the Earth (70), said face (11) including:
- one or more reflectors (20), each reflector (20) being connected to said face (11) of the satellite via a deployment device (50) allowing to make the reflector (20) go from a retracted position to a deployed position, the reflectors (20) being stacked above one another facing the face (11) of the satellite when there are several reflectors and when the reflectors are in the retracted position,
- for each reflector (20), a radiofrequency source (30) for emission or for reception for forming a beam (31) carrying a radio signal to or from the Earth (70),
said face (11) being **characterised in that**
- each reflector (20), each source (30) and each deployment device (50) are arranged so that a beam (31) coming from a source (30) is aimed at the centre (71) of the Earth (70) when the satellite (10) is in orbit and the associated reflector (20) is in a default deployed position,
- each deployment device (50) is configured to move each reflector (20) into an adjusted deployed position in which the reflector (20) is aimed at a specific geographic zone (72) corresponding to a mission of the satellite.

8. Face (11) according to claim 7, including between one and three reflectors (20), each reflector (20) satisfying one of the following sets of parameters, each set of parameters including a diameter of the reflector, a focal distance of the reflector, and an offset distance (Δ1) measured between the vertex (V) of a paraboloid in which the reflector (20) is inscribed and the tip of the reflector (20) closest to said vertex (V):
- diameter between 220 and 270 centimetres, focal distance between 380 and 420 centimetres, offset distance between 65 and 105 centimetres,
- diameter between 220 and 270 centimetres, focal distance between 358 and 398 centimetres, offset distance between 90 and 130 centimetres,
- diameter between 220 and 270 centimetres, focal distance between 375 and 415 centimetres, offset distance between 90 and 130 centimetres.

9. Face (11) according to one of claims 7 or 8, wherein the face (11) includes at least two reflectors (20).

10. Face (11) according to claim 9, said face (11) further including holding and releasing devices (60) comprising a portion (62) detachable on command and allowing to hold the reflectors (20) in the retracted position during a phase of launch of the satellite and release the reflectors (20) into the deployed position once the satellite is in orbit, the various reflectors sharing the same holding and releasing devices (60).

11. Face (11) according to one of claims 9 or 10, wherein the reflectors (20) are concentric when the reflectors (20) are in the retracted position.

12. Face (11) according to one of claims 9 to 11, wherein the sources (30) and/or the deployment devices (50) are aligned according to a transverse axis of the face (11).

13. Satellite (10) including a face (11) according to one of claims 7 to 12.
